# EUROPEAN PATENT APPLICATION

(11) **EP 1 372 078 A1**
(43) Date of publication of application: **17.12.2003**
(21) Application number: 01970157.2
(22) Date of filing: 20.09.2001
(51) Int. Cl.: G06F 13/00

(54) **SUPERVISORY CONTROL SYSTEM, SUPERVISORY CONTROL METHOD, CONTROL PROGRAM FOR CONTROLLED DEVICE**

(30) Priority: 23.03.2001 JP 2001085831
(71) Applicant: MITSUBISHI DENKI KABUSHIKI KAISHA, Tokyo 100-8310 (JP)
(72) Inventor: YAMAZAKI, Takahiko, c/o Mitsubishi Denki K. K., Tokyo 100-8310 (JP)
(74) Representative: Pfenning, Meinig & Partner
(86) International application number: JP0108164
(87) International publication number: WO02077830

(57) **Abstract**

In a monitoring control system that employs a simple network management protocol, an operations system (1) sends Set Request including a block request to a device (2) to be operated when a specific hardware in the device (2) is to set to a block status. A controller (14) in the device (2) that receives the block request starts a block processing to the designated specific hardware, changes a status of an item in a management information base (12) related to the block of the hardware to a block status, sends back Get Response including a change result to the operations system (1). The controller (14) then generates Trap including a request ID that indicates the block request, and sends the Trap to the operations system (1) when completing the block processing.

## Description

### TECHNICAL FIELD

The present invention relates to a monitoring control system formed with an operations system (OpS: Operations System) and a device to be operated, and a network monitoring control method for the monitoring control system. More specifically, the present invention relates to a monitoring control system and a monitoring control method that employ SNMP (Simple Network Management Protocol) as a mode of management of a network.

### BACKGROUND ART

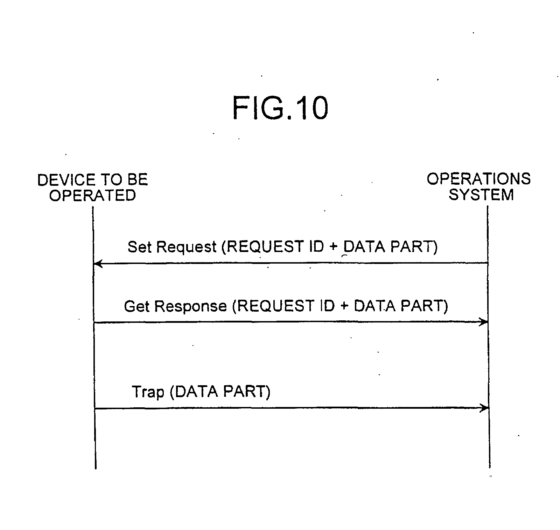

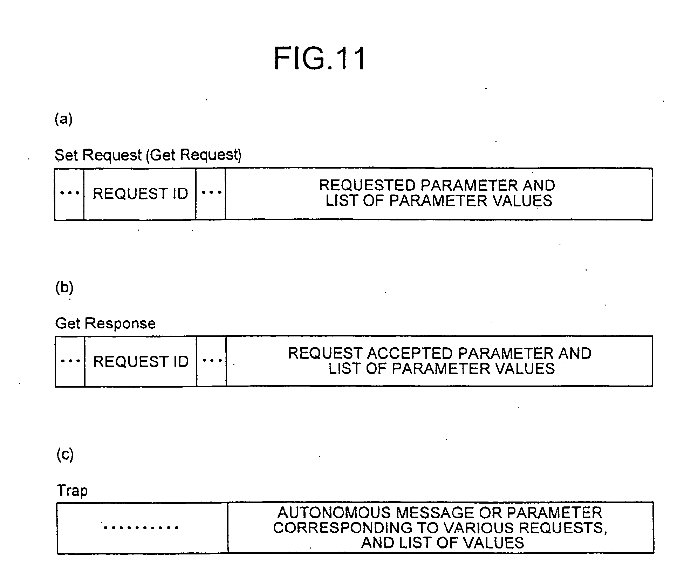

A conventional monitoring control system and a conventional monitoring control method will be explained below. Fig. 10 shows the operations of the conventional monitoring control system that employs the SNMP (Simple Mode of management of a network) as the mode of management of a network. Fig. 11 shows formats of messages exchanged between an operations system and a device to be operated. The device includes a virtual database that stores management information referred to as MIB (Management Information Base).

Set Request shown in Fig. 11, for example, is a request message output from the operations system when the management information in the MIB is to be changed. The device that receives this message, starts a processing for changing the management information in the MIB to a requested value. At this time, the device sends back a response message of Get Response as a notification of accepting the Set Request to the operations system. As shown in Fig. 11, Set Request and Get Response include "request ID (block request, etc.)" and "requested parameter and list of values of the parameter (data part: detailed contents for the request)". Further, as shown in Fig. 11, Get Response includes "request ID" and "request accepted parameter and list of values of the parameter". The block means herein to stop the function of a target device (e.g., a card).

Get Request is a request message output from the operations system when the management information in the MIB is to be acquired. The device to be operated that receives this request message, sends back Get Response including the requested management information in the MIB to the operations system. As shown in Fig. 11, Get Request includes "request ID" and "requested parameter and list of values of the parameter (data part)".

Trap is a message such that the device to be operated autonomously notifies the operations system of internal abnormality of the device or a change in status and a change in status of the device caused by Set Request. As shown in Fig. 11, Trap includes "autonomous message or each parameter corresponding to various requests and list of values of the parameter (data part)".

As can be seen, the conventional monitoring control system and monitoring control method realize network management using the five types of messages.

However, the conventional monitoring control system has the following disadvantage. For example, there is a case where when the operations system sends, for example, a block request (block) as Set Request, the device to be operated sends back Get Response indicating that this block request is accepted, and then the device sends Trap that indicates a block status to the operations system. In this case, the operations system cannot determine from the content of Trap whether the block status indicated by this Trap is caused by the block request.

Specifically, the conventional monitoring control system has a disadvantage in that the operations system cannot determine from the content of Trap whether the block status is a block status caused by the block request, a block status caused by another request, or an autonomous block status set by the device to be operated.

To solve the problems, it is an object of the present invention to provide a monitoring control system and a monitoring control method that allow an operations system to determine from the content of Trap, the cause of a current status (a block status, another abnormal status, a change in status, or the like) of a device to be operated.

### DISCLOSURE OF THE INVENTION

A monitoring control system according to the present invention employs SNMP as a mode of management of a network. An operations system sends a setting request message including a control request to a device to be operated when a specific H/W in the device is to be controlled. A controller in the device to be operated that receives the control request starts control over the designated specific H/W, changes a status of an item in an MIB related to the control request to the designated H/W to a predetermined status, and sends back a response message including a change result to the operations system. The controller in the device generates an autonomous message including a request ID that indicates the control request, and sends the autonomous message to the operations system when completing the control.

In the monitoring control system according to the next invention, the device to be operated does not accept another setting request message of the same type as the setting request message during a period since receiving the setting request message until outputting the autonomous message.

In the monitoring control system according to the next invention, formats of the autonomous messages are discriminated from each other based on a block processing performed under autonomous control of the H/W and a block processing performed in response to the control request.

In the monitoring control system according to the next invention, each of request IDs of the setting request message, the response message, and the autonomous message is provided with a terminal for maintenance ID or a terminal for user ID, and with a command ID.

In the monitoring control system according to the next invention, each of request IDs of the setting request message, the response message, and the autonomous message is provided with a terminal for maintenance ID or a terminal for user ID, and with a client ID and a command ID.

In the monitoring control system according to the next invention, each of request IDs of the setting request message, the response message, and the autonomous message is provided with a client ID and a command ID.

A monitoring control method according to the next invention employs SNMP as a mode of management of a network. The method includes a setting request message transmission step of sending a setting request message including a control request from an operations system to a device to be operated when the operations system is to control a specific H/W in the device; a response message reply step of allowing a controller in the device that receives the control request to start control over the designated specific H/W, to change a status of an item in an MIB related to the control request to the designated H/W to a predetermined status, and to send back a a response message including a change result to the operations system; and an autonomous message transmission step of allowing the controller in the device to generate an autonomous message including a request ID that indicates the control request, and to send the autonomous message to the operations system when the controller completes the control.

In the monitoring control method according to the next invention, another setting request message of the same type as the setting request message is not accepted by the device to be operated during a period since receiving the setting request message until outputting the autonomous message.

In the monitoring control method according to the next invention, formats of the autonomous messages are discriminated from each other according to a block processing performed under autonomous control of the H/W and a block processing performed in response to the control request.

A control program for a device to be operated according to the next invention allows a computer to execute: an SNMP autonomous message transmission step of generating an autonomous message including a request ID that indicates a control request and sending the autonomous message to an operations system when control requested from the operations system is completed.

In the control program for a device to be operated according to the next invention, the computer is allowed to execute control not to accept another setting request message of the same type as the setting request message during a period since receiving a setting request message until outputting the autonomous message.

In the control program for a device to be operated according to the next invention, the computer is allowed to execute an autonomous message generation step of generating different autonomous messages based on a block processing performed under autonomous control of an H/W and a block processing performed in response to the control request.

### BRIEF DESCRIPTION OF THE DRAWINGS

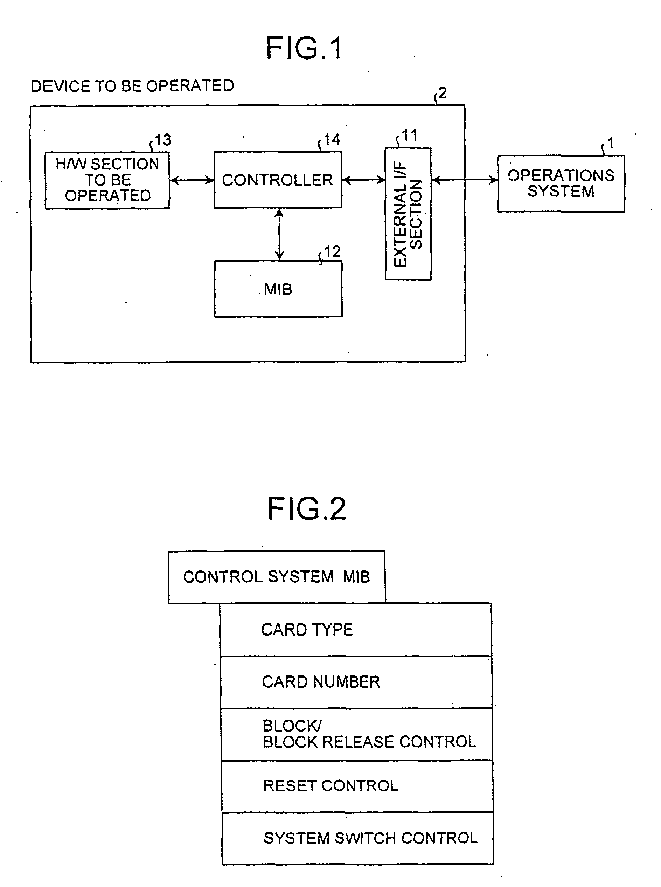

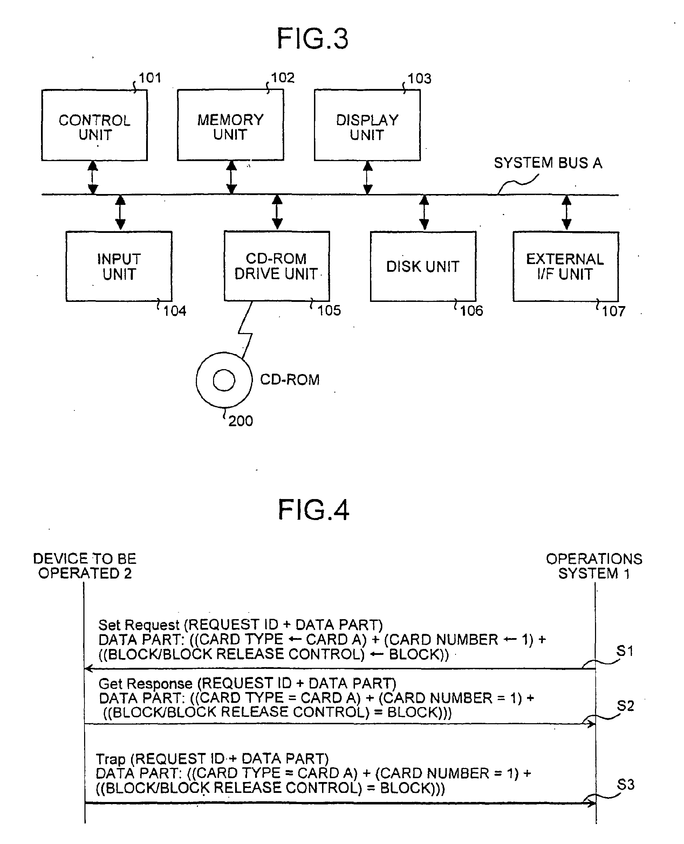

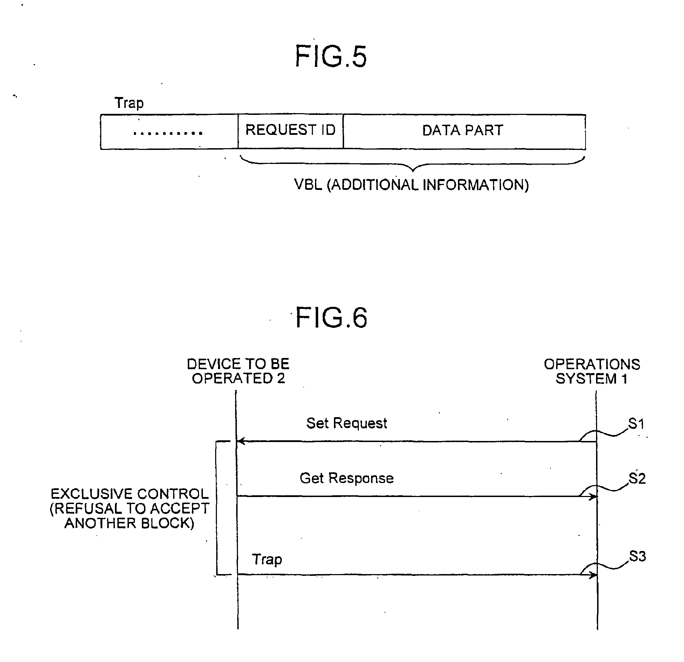

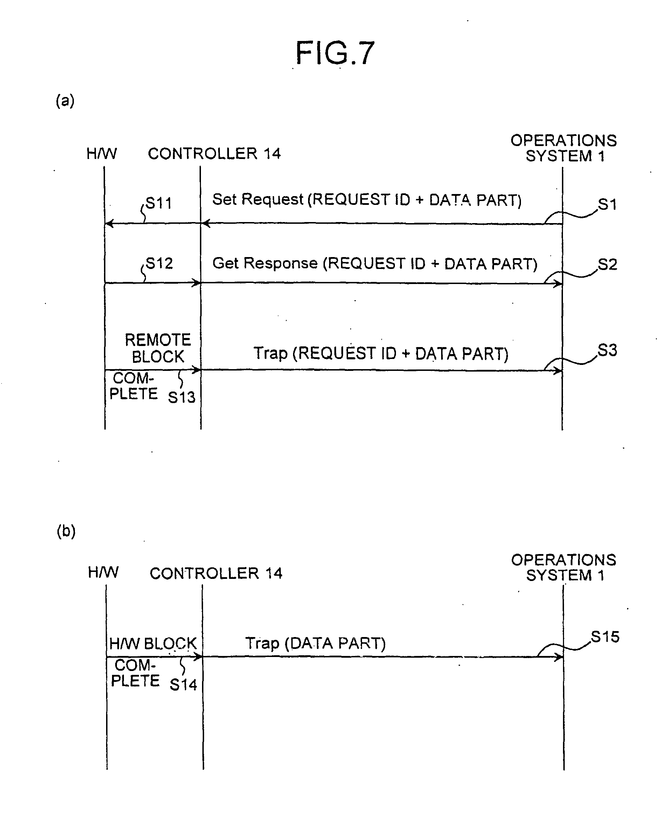

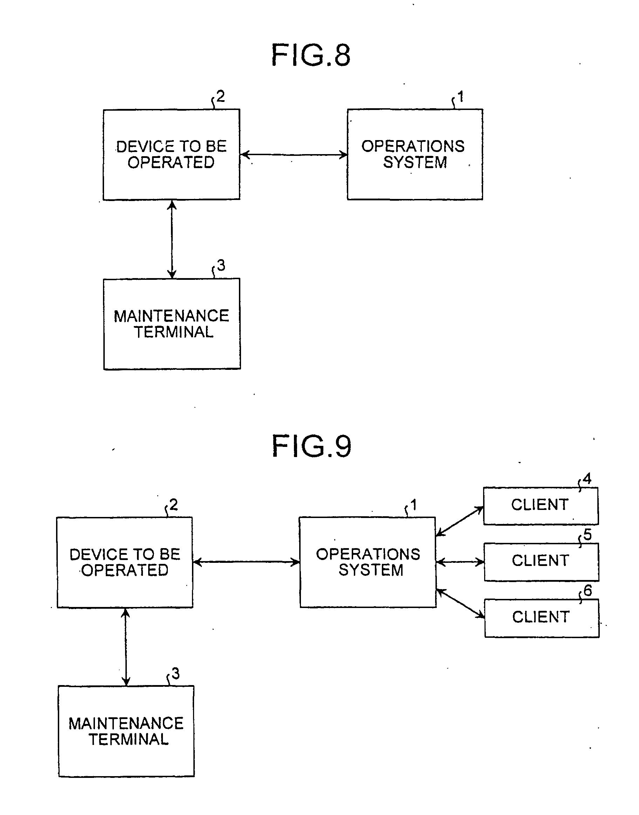

Fig. 1 shows the configuration of a monitoring control system according to a first embodiment of the present invention; Fig. 2 shows the configuration of an MIB 12; Fig. 3 shows the configuration of an ordinary computer system that can execute a control program for a device to be operated in the first embodiment; Fig. 4 shows a monitoring control method of the first embodiment; Fig. 5 shows the format of Trap sent from the device to be operated to an operations system; Fig. 6 shows a monitoring control method according to a second embodiment of the present invention; Fig. 7 shows a monitoring control method according to a third embodiment of the present invention; Fig. 8 shows the configuration of a monitoring control system according to a fourth embodiment of the present invention; Fig. 9 shows the configuration of a monitoring control system according to a fifth embodiment of the present invention; Fig. 10 shows the operation of the conventional monitoring control system that employs SNMP as a mode of management of a network; and Fig. 11 shows formats of messages exchanged between the operations system and the device to be operated.

### BEST MODE FOR CARRYING OUT THE INVENTION

Exemplary embodiments of the monitoring control system and the monitoring control method according to the present invention will be explained in detail below with reference to the drawings. It is noted that this invention is not limited by the embodiments.

### First Embodiment:

Fig. 1 shows the configuration of a monitoring control system according to a first embodiment of the present invention. In Fig. 1, 1 denotes an operations system (OpS), and 2 denotes a device to be operated. In the device 2, 11 denotes an external I/F section that relays various request messages and response messages, 12 denotes an MIB that operates as a virtual database that stores management information, 13 denotes a H/W section to be operated that includes a plurality of H/Ws each to be set in response to a setting request message from the operations system 1, and 14 denotes a controller that controls the MIB 12 and the H/W section 13 in response to the various request messages. Fig. 2 shows the configuration of the MIB 12.

The monitoring control system in this embodiment employs SNMP as a mode of management of a network. It is noted that SNMP is a standard protocol for network management in TCP/IP environment. The SNMP is managed and operated based on three request messages of Set Request, Get Request, and Get next Request, one response message of Get Response, and one autonomous message of Trap.

Specifically, the operations system 1 requests the check of management information in the MIB 12 provided in the device to be operated 2 and the change of the content of the management information in the same manner as that of the conventional technology. In addition, the device to be operated 2 operates the management information based on the request from the operations system 1 in accordance with a control program for the device to be operated in this embodiment, and also notifies the operations system 1 of a change in the status of the device 2 or the occurrence of abnormality.

Fig. 3 shows the configuration of an ordinary computer system that operates as the device to be operated 2 and that can execute the device to be operated control program in this embodiment.

This computer system includes, for example, a control unit 101 (corresponding to the controller 14) including a CPU, a memory unit 102 (including the MIB 12), a display unit 103, an input unit 1.04, a CD-ROM drive unit 105, a disk unit 106, and an external I/F unit 107 (corresponding to the external I/F section 11). These units are mutually connected through a system bus A. In Fig. 3, the control unit 101 executes the control program for the device to be operated in this embodiment. The memory unit 102 includes memories such as RAM and ROM, and stores the program to be execute by the control unit 101, necessary data (including the MIB 12) acquired in the course of processing, and the like. The display unit 103 is formed with a CRT, an LCD, (Liquid Crystal Display panel), or the like, and displays various screens for the user of the computer system. The input unit 104 is formed with a keyboard, a mouse, and the like, and is used by the user of the computer system to input various pieces of information. The external I/F unit 107 relays communications with the operations system. In addition, the CD-ROM 200 shown in Fig. 3 stores the program for the device to be operated in this embodiment.

In the computer system thus constituted, a program is first installed to the disk unit 106 from the CD-ROM 200 set at the CD-ROM drive unit 105. The program is read from the disk unit 106 when the computer system, and the read program is stored in.the memory unit 102. In this status, the control unit 101 (CPU) executes the program for the device to be operated in this embodiment based on the program stored in the memory unit 102.

According to the present invention, the CD-ROM 200 provides the program for the device to be operated. However, a recording medium of this program is not limited to the CD-ROM 200, but may be any other recording medium such as a magnetic disk, e.g., a floppy disk, a magneto-optical disk, or a magnetic tape, in accordance with a computer that constitutes the system.

A case when the operations system 1 sends a block request . (block) will be explained as one example of the operation of the device to be operated 2 that can execute the program for the device to be operated. Fig. 4 shows a monitoring control method of the first embodiment. Fig. 5 shows the format of an autonomous message (Trap) sent from the device to be operated 2 to the operations system 1.

In the operations system 1, when a specific H/W which constitutes the H/W section to be operated 13 is set to a block status, a block request as one of Set Request is first sent to the device to be operated 2 (step S1). An ID that indicates the block request as a request ID is described on this Set Request, and a card ID and other detailed information (card ID, card type, parameter information indicating whether the request is block or block release, and the like) as a data part is described thereon. The card ID is an identifier to make a plurality of cards (note that the H/W section 13 is formed with a plurality of cards including a plurality types of cards) identifiable.

The controller 14 in the device to be operated 2 that receives the block request through the external I/F section 11, starts a block processing for the designated specific H/W in the H/W section 13, and changes the status of a block-related item of the management information corresponding to the H/W in the MIB 12 to a block status. The controller 14 in the device 2 then sends back Get Response on which the change result is described, to the operations system 1 (step S2). An ID that indicates the block request as a request ID is described on this Get Response, and the card ID and other detailed information are described thereon as a data part.

Further, if it is necessary to send, for example, processing information corresponding to the block request to the operations system 1 depending on the specification of the system, the controller 14 of the device to be operated 2 generates VBL (additional information), i.e., Trap on which a request ID that indicates the block request and a data part that indicates a card ID and the other detailed information are described, and sends the Trap thus generated to the operations system 1.

As explained above, in the first embodiment, the device to be .operated adds the request ID indicating the block request to Trap. It is, therefore, possible for the operations system to reliably determine that this Trap is sent in response to the block request.

### Second Embodiment:

In the first embodiment, by adding the request ID that indicates the block request to Trap, it is possible to surely determine that this Trap is sent in response to the block request.

In a second embodiment, by contrast, it is ensured that Trap sent from the device to be operated 2 is a response to a block request to a specific H/W sent from the operations system 1.

Fig. 6 shows a monitoring control method of the second embodiment. In Fig. 6, similarly to the first embodiment, a case when the operations system 1 sends a block request (block) is shown. Since the overall configuration of the monitoring control system in this embodiment is the same as that in the first embodiment shown in Fig. 1, the constituent elements of the system are denoted by the same reference symbols, respectively and they will not be explained herein. In addition, only the operations different from those in the first embodiment will be explained herein.

The device to be operated 2 in this embodiment conducts exclusive control during a period since receiving Set Request at step S1 until outputting Trap at step S3. That is, even if receiving another Set Request of the same.type (block request), the device 2 exercises control so as not to accept another Set Request.

By so controlling, another Set Request of the same type is not accepted during a period since one Set Request is accepted until Trap is output in this embodiment. Therefore, it is possible to ensure that Trap output following Set Request and Get Response is a response to the block request to the specific H/W sent from the operations system.

### Third Embodiment:

In the preceding first and second embodiments, the monitoring control system is constituted to be capable of ensuring that Trap output following Set Request and Get Response is a response to the block request sent from the operations system 1.

In a third embodiment, the monitoring control system is further constituted so that the operations system 1 can reliably determine whether Trap sent from the device to be operated 2 indicates a block status caused by the autonomous control of an H/W or a block status caused by the block request sent from the operations system 1.

Fig. 7 shows a monitoring control method of the third embodiment. In Fig. 7, similarly to the first embodiment, a case when the operations system 1 sends a block request (block) is shown. Since the overall configuration of the monitoring control system in this embodiment is the same as that in the first embodiment shown in Fig. 1, the constituent elements of the system are denoted by the same reference symbols, respectively and they will not be explained herein. In addition, only the operations different from those in the first and second embodiments will be explained herein.

The controller 14 in the device to be operated 2 that receives Set Request at step S1, sends a block request from the operations system 1, i.e., a remote block request, to an H/W (in the H/W section to be operated 13) designated by Set Request (step S11 in Fig. 7(a)). The H/W that receives the remote block request, sends an acceptance complete notification for the remote block request to the controller 14 (step S12).

When sending Get Response and then performing the remote block processing in the procedure at step S2, the H/W sends a remote block complete notification to the controller 14 in the device to be operated 2 (step S13). The controller 14 adds VBL (additional information) to Trap, and sends the Trap to the operations system 1 in the same manner as that explained in the first embodiment (step S3).

On the other hand, if a specific H/W is autonomously blocked, the H/W sends an H/W block complete notification to the controller 14 (step S14 in Fig. 7(b)). The controller 14 adds VBL (additional information) without a request ID to Trap, and sends the Trap to the operations system 1 (step S15).

As explained above, in the third embodiment, the formats of Trap are discriminated from each other by a block processing under the autonomous control of the H/W and a block processing in response to the block request sent from the operations system. It is, therefore, possible to reliably determine whether Trap indicates the block status under the autonomous control of the H/W or the block status in response to the block request.

### Fourth Embodiment:

Fig. 8 shows the configuration of a monitoring control system according to a fourth embodiment of the present invention. In Fig. 8, 3 denotes a maintenance terminal.

In this embodiment, each of request IDs shown in Figs. 11(a) and (b) and the request ID of Trap shown in Fig. 5 consists of "ID for maintenance/user" + "command ID (block request, etc.)". The "ID for maintenance/user" indicates "maintenance terminal ID/ user terminal ID". The use terminal corresponds to the operations system 1 shown ' in Fig. 8. The maintenance terminal 3 is a terminal used by the manufacturer of the device to be operated 2 for maintenance, and is normally disposed next to the device to be operated (or a separate remote terminal is sometimes used as well as the terminal 3). Namely, the maintenance terminal 3 has functions that can be implemented by the user terminal and also can use privileged maintenance commands such as a forced reset or rewrite of a memory in a card.

In this embodiment, therefore, it is possible to easily specify a terminal type, i.e., whether the terminal is a terminal for maintenance or a terminal for user.

### Fifth Embodiment:

Fig: 9 shows the configuration of a monitoring control system according to a fifth embodiment of the present invention. In Fig. 9, 4, 5, and 6 denote clients assigned to respective users. The constituent elements of the system are denoted by the same reference symbols as those in the preceding embodiments, respectively and they will not be explained herein. The user terminal in this embodiment corresponds to the operations system 1 and the clients 4 to 6 shown in Fig. 9.

In this embodiment, each of the request IDs shown in Figs. 11(a) and (b) and the request ID of Trap shown in Fig. 5 consists of "ID for maintenance/user" + "client ID" + "command ID".

By constituting so, in this embodiment, it is possible to easily specify which of the clients makes a request of Set Request, Get Request, or Get next Request, to which client Get Response is responded, or from which client Trap indicating an abnormal status is received.

In this embodiment, the request ID consists of "ID for maintenance/user" + "client ID" + "command ID". However, the configuration of the request ID is not limited thereto. Even if the request ID consists of, for example, "client ID" + "command ID", it is possible to attain the same advantages.

As explained so far, according to the present invention, the system is constituted so that the device to be operated adds the request ID that indicates a block request, to Trap. By so constituting, it is advantageously possible to attain the monitoring control system that allows the operations system to reliably determine that this Trap is sent in response to the block request.

According to the next invention, the system is constituted so that the device to be operated does not accept another Set Request of the same type as the setting request message during a period since receiving the Set Request until outputting the Trap. By so constituting, it is advantageously possible to attain the monitoring control system that can ensure that Trap output following Set Request and Get Response is a response to the block request to the specific H/W sent from the operations system.

According to the next invention, formats of the Trap are discriminated from each other based on a block processing performed under autonomous control of the H/W and a block processing performed in response to the control request. By doing so, it is advantageously possible to attain the monitoring control system that can reliably determine whether this Trap indicates the block status under the autonomous control of the H/W or the block status in response to the block request.

According to the next invention, it is advantageously possible to attain the monitoring control system that can easily specify the type of the terminal from each message.

According to the next invention, it is advantageously possible to attain the monitoring target system that can easily specify which of the clients makes a request of Set Request, Get Request, or Get next Request, to which client Get Response is responded, or from which client Trap indicating an abnormal status is received.

According to the next invention, it is advantageously possible to attain the monitoring target system that can easily specify which of the clients makes a request of Set Request, Get Request, or Get next Request, to which client Get Response is responded, or from which client Trap indicating an abnormal status is received.

According to the next invention, the device to be operated adds the request ID that indicates the block request, to Trap. It is thereby advantageously possible to attain the monitoring control method that enables the operations system to reliably determine that this Trap is sent in response to the block request.

According to the next invention, another Set Request of the same type as the setting request message is not accepted during a period since Set Request is received until the Trap is output. By doing so, it is advantageously possible to attain the monitoring control method that can ensure that Trap output following Set Request and Get Response is a response to the block request to the specific H/W sent from the operations system.

According to the next invention, formats of the Trap are discriminated from each other based on a block processing under autonomous control of the H/W and a block processing in response to the block request sent from the operations system. By doing so, it is advantageously possible to attain the monitoring control method that can reliably determines whether this Trap indicates the block status under the autonomous control of the H/W or the block status in response to the block request.

According to the next invention, the request ID that indicates the block request is added to Trap. it is thereby advantageously possible to enable the operations system to reliably determine that this Trap is sent in response to the block request.

According to the next invention, another Set Request of the same type as the setting request message is not accepted during a period since Set Request is received until the Trap is output. By doing so, it is advantageously possible to ensure that Trap output following . Set Request and Get Response is a response to the block request to the specific H/W sent from the operations system.

According to the next invention, formats of the Trap are discriminated from each other based on a block processing under autonomous control of the H/W and a block processing in response to the block request sent from the operations system. By doing so, it is advantageously possible to reliably determine whether this Trap indicates the block status under the autonomous control of the H/W or the block status in response to the block request.

### INDUSTRIAL APPLICABILITY

As explained so far, the monitoring control system, the monitoring control method, and the control program for a device to be operated according to the present invention are suited for the network management system that is formed with the operations system and the device to be operated, and that employs SNMP.

## Claims

1. A monitoring control system that employs a simple network management protocol as a mode of management of a network, wherein
an operations system (1) sends a setting request message including a control request to a device to be operated (2) when a specific hardware in the device (2) is to be controlled,
a controller (14) in the device (2) that receives the control request starts control over the specific hardware designated, changes a status of an item in a management information base (12) related to the control request to the designated hardware to a predetermined status, and sends back a response message including a change result to the operations system (1), and
the controller (14) in the device (2) generates an autonomous message including a request ID that indicates the control request, and sends the autonomous message to the operations system (1) when completing the control.

2. A device (2) to be operated that forms a monitoring control system, for employing a simple network management protocol, the device comprising:
a controller (14) that, when receiving a setting request message including a control request for controlling a specific hardware from an operations system (1), starts control over the specific hardware designated, changes a status of an item in a management information base (12) related to the control request to the designated hardware to a predetermined status, sends back a response message including a change result to the operations system (1), generates an autonomous message including a request ID that indicates the control request, and sends the autonomous message to the operations system (1) when completing the control.

3. The device (2) according to claim 2, wherein another setting request message of the same type as the setting request message is not accepted during a period since receiving the setting request message until outputting the autonomous message.

4. The device (2) according to claim 2, wherein formats of the autonomous messages are discriminated from each other based on a block processing performed under autonomous control of the hardware and a block processing performed in response to the control request.

5. An operations system (1) that forms a monitoring control system for employing a simple network management protocol, the operations system comprising:
a controller that sends a setting request message including a control request to a device (2) to be operated when a specific hardware in the device (2) is to be controlled, receives a response message including a change result of an item from the device (2) as a result of control to the specific hardware, wherein the item in a management information base (12) related to the control request to the designated hardware, and receives an autonomous message including a request ID that indicates the control request, from the device (2).

6. The operations system (1) according to claim 5, wherein it is determined whether a block processing is performed under autonomous control of the hardware or a block processing is performed in response to the control request, from autonomous messages having different formats.

7. A monitoring control method that employs a simple network management protocol as a mode of management of a network, comprising:
a setting request message transmission step of sending a setting request message including a control request from an operations system (1) to a device to be operated (2) when the operations system (1) is to control a specific hardware in the device (2);
a response message reply step of allowing a controller in the device (2) that receives the control request to start control over the specific hardware designated to change a status of an item in a management information base (12) related to the control request to the designated hardware to a predetermined status, and to send back a response message including a change result to the operations system (1); and
an autonomous message transmission step of allowing the controller (14) in the device (2) to generate an autonomous message including a request ID that indicates the control request, and to send the autonomous message to the operations system (1) when the controller (14) completes the control.

8. The monitoring control method according to claim 7, wherein another setting request message of the same type as the setting request message is not accepted by the device to be operated (2) during a period since the setting request message is received until the autonomous message is output.

9. The monitoring control method according to claim 7, wherein formats of the autonomous messages are discriminated from each other based on a block processing performed under autonomous control of the hardware and a block processing performed in response to the control request.

10. A control program for a device (2) to be operated that allows a computer to execute:
a simple network management protocol autonomous message transmission step of generating an autonomous message including a request ID that indicates a control request and sending the autonomous message to an operations system (1) when control requested from the operations system (1) is completed.

11. The control program for a device (2) to be operated according to claim 10, wherein the computer is allowed to execute control not to accept another setting request message of the same type as the setting request message during a period since receiving a setting request message until outputting the autonomous message.

12. The control program for a device (2) to be operated according to claim 10, wherein the computer is allowed to execute an autonomous message generation step of generating different autonomous messages based on a block processing performed under autonomous control of a hardware and a block processing performed in response to the control request.
